# EUROPEAN PATENT SPECIFICATION

(11) **EP 0 495 579 B1**
(45) Date of publication and mention of the grant of the patent: **28.02.1996**
(21) Application number: 92300151.5
(22) Date of filing: 08.01.1992
(51) Int. Cl.: C09K 7/02

(54) **Drilling fluid**
Bohrflüssigkeit
Fluide de forage

(30) Priority: 12.01.1991 GB 9100699
(43) Date of publication of application: 22.07.1992
(73) Proprietor: THE BRITISH PETROLEUM COMPANY P.L.C., London EC2M 7BA (GB)
(72) Inventor: Elliott, Gregory Phillip, The British Petroleum, Sunbury-on-Thames, Middlesex, TW16 7LN (GB)
(74) Representative: Wilson, Michael John

(56) References cited:
- EP-A- 0 453 625
- FR-A- 2 624 132
- US-A- 2 786 027

## Description

This invention relates to water-based drilling fluids which are suitable for use in shale and clay formations.

A drilling fluid is used in conjunction with the rotary system of drilling. The drilling fluid is pumped from the surface down the inside of the rotating drill string, discharged through ports in the bit and returned to the surface via the annular space between the drill string and the hole.

The drilling fluid serves to cool and lubricate the bit and drill string, bring drill cuttings to the surface, consolidate the side of the drilled hole, prevent squeezing-in or caving of the formation, control subsurface pressures, suspend drill cuttings when the column is static and minimise damage to any potential pay zone that might be encountered.

Drilling fluids generally contain a carrier, a weighting agent and chemical additives. They are commonly divided into two categories, water based muds (WBM) and oil based muds (OBM). In the former the carrier is an aqueous medium and in the latter it is an oil. Diesel oil was used in the past as the oil, but recently low toxicity drilling oils have been developed for this purpose.

While WBM are more environmentally acceptable than OBM (since the latter still give rise to the problem of disposing of large quantities of oil contaminated drill cuttings, even if the oil is of low toxicity), they are recognised as being technically inferior in a number of important areas, such as thermal stability, lubricity, and shale inhibition.

Although shale is soft and therefore relatively easy to drill through, it still causes many problems for the drilling engineer. It disperses easily into the fluid, large lumps break off and fall into the hole, pores in the shale can contain fluids trapped under pressure, and in extreme cases, the borehole wall may collapse.

Since shale makes up a high proportion of the rocks drilled in exploratory and production wells for oil and gas, particularly in important producing areas such as the North Sea, it is important that drilling times and problems be kept to a minimum when drilling through such formations.

Many WBM formulations incorporating additives have been suggested in an attempt to control reactive shales (e.g. as described in US-A-2 786 027 and FR-A-2 624 132). Such additives include:
(a) salts such as potassium chloride to limit water uptake, reduce the swelling of the shale, and reduce leaching of any salt deposits encountered,
(b) chemically modified starch or cellulosic materials which are used to reduce fluid loss,
(c) water soluble polyacrylamides or other water soluble polymers which adsorb on the surface of shale to bind it with a coating of polymer, thereby reducing dispersion of the shale,
(d) lime or gypsum which, although sparingly soluble, act in a similar manner to (a), and
(e) asphaltene derived products which assist in fluid loss control by acting as blocking agents for cracks and microfractures.

To date, however, none of these formulations has been able to provide shale inhibition to the levels achieved with OBM.

This is because an OBM does not react with shale. A conventional WBM will, however, react to a greater or lesser extent with many shales causing them to swell and can give rise to problems such as stuck pipe, tight hole, overgauge hole, poor directional control, poor cementing and poor mud condition (leading to extensive dumping and diluting and therefore high mud costs).

It is an object of the present invention to develop a WBM which approaches the technical performance of an OBM without sacrificing its environmental advantages.

Although, as previously acknowledged, the use of potassium chloride as an additive to WBM is known, its effect is not always consistent and depends to a considerable extent on the other constituents of the drilling fluid.

We have found that this inconsistency is marked in the case of polyalkylene glycol additives, and particularly so with mono-, di-, tri- and polyalkylene glycol additives. In the case of these compounds, the addition of a potassium salt to the mono-, di- and tri-ethylene glycols has little positive effect and, indeed, can have a negative effect and can encourage the dispersion of certain clays and shales, e.g. London clay and to a lesser extent Oxford clay. In the case of tetra- and higher molecular weight polyalkylene glycols we have discovered that there is a synergistic clay - stabilising effect between these compounds and the potassium salt.

Thus according to the present invention there is provided a water based drilling fluid comprising:
(a) an aqueous medium,
(b) a polyalkylene glycol of general formula: 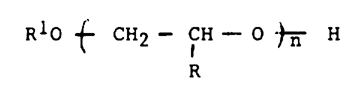 wherein R is H or CH₃, R¹ is H or an alkyl group containing 1 to 4 carbon atoms and n is a number in the range 4 to 200, in amount 0.5 to 60%, preferably 1 to 20%, by volume of the fluid, and
(c) a potassium salt, in amount 5-50, preferably 10-30 ppb (pounds per barrel), ie, 14.3-143, preferably 28.6-85.7 g/l.

The concentration of polyalkylene glycol required to achieve a desired effect is dependent on the molecular weight of the glycol. In general, the lower the molecular weight, the higher the concentration required, and vice versa.

Suitable polyalkylene glycols are polyethylene glycols.

Polyalkylene glycols containing various ratios of ethylene oxide (EO) to propylene oxide (PO) units are also suitable, e.g. 75% EO, 25% PO; 50% EO, 50% PO; and 25% EO, 75% PO.

The salt is a potassium salt, preferably potassium chloride. However, other potassium salts such as formate, acetate, carbonate and phosphate are also suitable.

The fluid may also contain additional conventional ingredients such as weighting agents, e.g. barite, haematite or galena; viscosifers, e.g. xanthan gum, fluid loss control agents, eg starch or cellulose derivatives, shale inhibitors, eg polyacrylamide, and pH control agents, e.g. sodium or potassium hydroxide.

The pH is suitably controlled to a value in the range 7 to 13.

The aqueous medium may be fresh or salt water.

The invention is illustrated with reference to the following Examples.

### Examples

In each experiment to evaluate the inhibitive properties of a fluid containing a polyalkylene glycol the procedure involved making up various water and solvent concentrations, adding a known amount of dispersive clay (2-4 mm fraction) and rolling the resulting mixture at room temperature and 20 rpm for 16 hours. At the end of this time, the non-dispersed clay fraction (>0.5 mm) was recovered, dried, weighed and any correlation between solvent type, concentration and shale inhibition noted.

In some experiments, potassium chloride or other salt was added to the mixture.

The tests were carried out on London clay, a Tertiary clay rich in swelling minerals and representative of a North Sea gumbo.

Shale may be defined as a fine grained sedimentary rock composed of consolidated silt and clay or mud.

Tests on clay samples are equivalent to tests on shales.

### Example 1

London Clay was dispersed in seawater containing differing concentrations of the polyethylene glycol materials mono, di, tri and tetra ethylene glycol and in the presence or absence of potassium chloride (10 ppb). The results are presented in Table 1. Figures in brackets represent the results of experiments in which potassium chloride was present. The results indicate that the addition of potassium chloride to seawater appears to encourage the dispersion of London Clay for the mono, di and tri ethylene glycols. However for tetraethylene glycol this effect is reversed and the addition of potassium chloride inhibits the dispersion of London Clay.

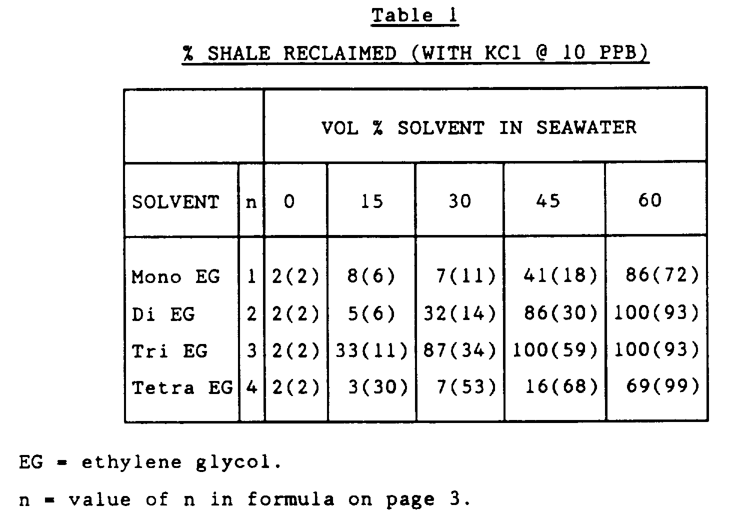

### Example 2

London Clay was dispersed in seawater containing differing concentrations of polyethylene glycols having values of n greater than 4. These results are presented in Table 2, as in Table 1. The results indicate that, for these higher molecular weight materials, substantially lower amounts of glycol material are required to inhibit the dispersion of London Clay and that the performance of these additives is enhanced in the presence of potassium chloride to the point at which London Clay may be completely prevented from dispersion.

**Table 2**

| % SHALE RECLAIMED (WITH KC1 @ 10 ppb) | | | | |
|---|---|---|---|---|
| | | VOL % SOLVENT IN SEAWATER | | |
| SOLVENT | n | 2 | 5 | 10 |
| A | 5 | 9(99) | 10(100) | 12(100) |
| B | 12 | 7(94) | 9(100) | 10(100) |
| C | 90 | 39(100) | 42(100) | 46(100) |
| D | 180 | 48(100) | 43(100) | 52(100) |

Solvent A is a mixture of polyethylene glycols of average molecular weight 280. Solvents B, C, and D are polyethylene glycols sold under the Trade Name Breox by BP Chemicals Ltd.

### Example 3

In order to assess whether the beneficial effect of adding potassium chloride results from the presence of potassium or simply from changing the ionic strength of the seawater, a variety of other salts of molar concentrations identical to 10ppb KC1 (0.4M) were added to seawater. The polyglycol used was Solvent C in Table 2 in a concentration of 0.5 volume %. The results of Example 3 are shown in Table 3 which shows that the beneficial effect is due to potassium.

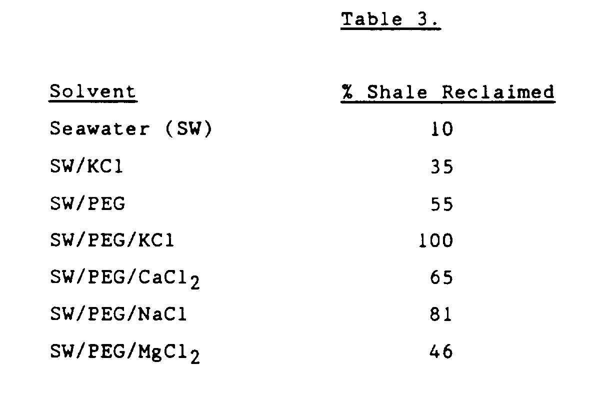

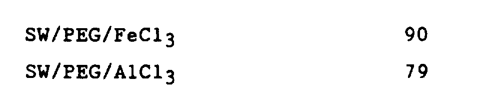

### Example 4

In order to assess the effect of chemical composition on the dispersion of London Clay, two polyalkylene glycol fluids containing differing ratios of ethylene and propylene oxide were assessed. The results are presented in Table 4. The results indicate that low amounts of polyalkylene glycol material are required to inhibit the dispersion of London Clay and that the performance of these additives is enhanced in the presence of potassium chloride to the point that London Clay may be completely prevented from dispersion.

**Table 4**

| % SHALE RECLAIMED (WITH KC1 @ 10 ppb) | | | | |
|---|---|---|---|---|
| | | VOL % SOLVENT IN SEAWATER | | |
| SOLVENT | n | 2 | 5 | 10 |
| E | 12 | 63(96) | 74(89) | 70(93) |
| F | 4.3 | 82(100) | 87(99) | 80(97) |

Solvents E and F are polyethylene/polypropylene glycols sold under the Trade Name Breox by BP Chemicals Ltd.

### Examples 5-9

Having established the inhibitive nature of the base fluid, other components may then be added to provide a whole mud system.

Examples 5-9 are illustrative of mud formulations and the effect of adding a polyglycol. The following procedure was used for preparing muds and for evaluating the effect of adding a polyglycol.

Muds were prepared by dissolving the polymers in seawater (with the exception of Example 6) and allowing the mixture to age for a minimum of 30 minutes. All mixing was carried out on a Hamilton Beach mixer. Potassium chloride was added to the solution of polymers and the pH finally adjusted with potassium hydroxide to pH9.

To assess highly inhibitive, fully formulated water based mud systems, a more aggressive dispersion test than that used in the previous experiments was adopted. The test uses approximately 100 grams of London Clay chips in the size range 4-8mm. The chips are placed inside a cylindrical drum whose curved surface comprises a 5mm brass or steel mesh. The drum containing the shale is partly immersed (to half the diameter of the drum) in the mud under test and the drum rotated for 4 hours at ambient temperature. After this time the shale remaining is recovered, washed, dried and the amount of shale lost by dispersion into the fluid calculated. Examination of the amounts of shale recovered in differing mud systems provide comparisons of the relative inhibitive nature of the mud systems under test.

The results are shown in the following Table 5.

**Table 5**

| COMPONENT | Ex 5 | Ex 6 | Ex 7 | Ex 8 | Ex 9 |
|---|---|---|---|---|---|
| Seawater | Base | | Base | Base | Base |
| KC1 | 25 | | 25 | 25 | 25 |
| Oil | | 100% | | | |
| Xanthan Gum | 1 | | 1 | 1 | 1 |
| CMC | 4 | | 4 | 4 | 4 |
| Anionic Polyacrylamide | | | 1 | 1 | 1 |
| Polyglycol (Type/Amount) | | | | 3%A | 3%F |
| Recovery from Cuttings | | | | | |
| Dispersion Test | 15 | 98 | 40 | 87 | 85 |

- All concentrations are in ppb (pounds per barrel) unless otherwise stated
- % are volume %

Oil = Low Toxicity drilling oil (ex BP 83HF from BP Chemicals Ltd).
Xanthan = XC polymer (ex Kelco).
CMC = Na carboxymethylcellulose - CMC LoVis (ex Baroid). Anionic Polyacrylamide - Alcomer 120L - ex Allied Colloids.
A = Solvent A of Example 2.
F = Solvent F of Example 4.
Example 5 is a basic WBM, not according to the present invention.
Example 6 is illustrative of an oil based mud.
Example 7 is illustrative of an improved water based mud, not according to the present invention.
Example 8 is the mud according to Example 7 with 3% polyglycol A added.
Example 9 is the mud according to Example 7 with 3% polyglycol F added.

Examples 8 and 9 are in accordance with the present invention and show greatly improved properties in comparison with the other WBM and approach the standard of the OBM.

## Claims

1. A water based drilling fluid comprising:
(a) an aqueous medium, characterised by the fact that it also contains the combination of
(b) a polyalkylene glycol of general formula: 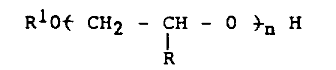 wherein R is H or CH₃, R¹ is H or an alkyl group containing 1 to 4 carbon atoms, and n is a number in the range 4 to 200, in amount 0.5 to 60% by volume of the fluid, and
(c) a potassium salt in amount 14.3-143 g/l.

2. A water based drilling fluid according to claim 1 wherein the concentration of the polyalkylene glycol is in the range 1 to 20% by volume of the fluid.

3. A water based drilling fluid according to either of the preceding claims wherein the concentration of the potassium salt is in the range 28.6 to 85.7 g/l.

4. A water based drilling fluid according to any of the preceding claims wherein the polyalkylene glycol is a polyethylene glycol.

5. A water based drilling fluid according to any of claims 1-4 wherein the polyalkylene glycol contains ethylene oxide and propylene oxide units in a ratio in the range 1:3 to 3:1.

6. A water based drilling fluid according to any of the preceding claims wherein the potassium salt is potassium chloride.

7. A water based drilling fluid according to any of claims 1-5 wherein the potassium salt is a formate, acetate, carbonate or phosphate.

8. A water base drilling fluid according to any of the preceding claims containing in addition one or more components selected from the group consisting of weighting agents, viscosifiers, fluid loss control agents, shale inhibitors, and pH control agents.

9. A water based drilling fluid according to claim 8 containing a shale inhibitor which is a polyacrylamide.

10. A water based drilling fluid according to claim 6 wherein the polyalkylene glycol is a polyethylene glycol or polyethylene/polypropylene glycol and n is 4-12.

11. A water based drilling fluid according to claim 6 or 10 wherein the amount of polyalkylene glycol is 2-10 Vol.- %.

## Patentansprüche

1. Bohrflüssigkeit auf Wasserbasis, umfassend:
(a) ein wässeriges Medium, dadurch gekennzeichnet, daß es auch die Kombination von
(b) einem Polyalkylenglycol der allgemeinen Formel: 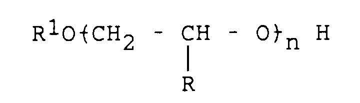 worin R H oder CH₃ bedeutet, R¹ H oder eine Alkylgruppe mit 1 bis 4 Kohlenstoffatomen bedeutet und n eine Zahl im Bereich von 4 bis 200 bedeutet, in einer Menge von 0,5 bis 60 Volumen-% der Flüssigkeit und
(c) einem Kaliumsalz in einer Menge von 14,3 bis 143 g/l, enthält.

2. Bohrflüssigkeit auf Wasserbasis nach Anspruch 1, wobei die Konzentration des Polyalkylenglycols im Bereich von 1 bis 20 Volumen-% der Flüssigkeit liegt.

3. Bohrflüssigkeit auf Wasserbasis nach einem der vorangehenden Ansprüche, wobei die Konzentration des Kaliumsalzes im Bereich von 28,6 bis 85,7 g/l liegt.

4. Bohrflüssigkeit auf Wasserbasis nach einem der vorangehenden Ansprüche, wobei das Polyalkylenglycol Polyethylenglycol ist.

5. Bohrflüssigkeit auf Wasserbasis nach einem der Ansprüche 1 bis 4, wobei das Polyalkylenglycol Ethylenoxid- und Propylenoxideinheiten mit einem Verhältnis im Bereich von 1:3 bis 3:1 enthält.

6. Bohrflüssigkeit auf Wasserbasis nach einem der vorangehenden Ansprüche, wobei das Kaliumsalz Kaliumchlorid ist.

7. Bohrflüssigkeit auf Wasserbasis nach einem der Ansprüche 1 bis 5, wobei das Kaliumsalz ein Formiat, Acetat, Carbonat oder Phosphat ist.

8. Bohrflüssigkeit auf Wasserbasis nach einem der vorangehenden Ansprüche, enthaltend zusätzlich eine oder mehrere Komponente(n), ausgewählt aus der Gruppe, bestehend aus Füllstoffen, Viskositätsmitteln, Mitteln gegen Flüssigkeitsverlust, Schieferinhibitoren und pH-Regelungsmitteln.

9. Bohrflüssigkeit auf Wasserbasis nach Anspruch 8, enthaltend einen Schieferinhibitor, nämlich ein Polyacrylamid.

10. Bohrflüssigkeit auf Wasserbasis nach Anspruch 6, wobei das Polyalkylenglycol Polyethylenglycol oder Polyethylen/Polypropylenglycol ist und n 4 bis 12 ist.

11. Bohrflüssigkeit auf Wasserbasis nach Anspruch 6 oder 10, wobei die Menge an Polyalkylenglycol 2 bis 10 % ist.

## Revendications

1. Fluide de forage à base d'eau comprenant:
(a) un milieu aqueux caractérisé par le fait qu'il contient la combinaison
(b) d'un poly(alkylèneglycol) de formule générale: 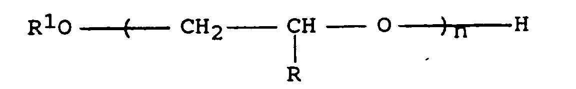 dans laquelle R est H ou CH₃, R¹ est H ou un radical alkyle contenant de 1 à 4 atomes de carbone, et n est un entier compris entre 4 et 200, dans une concentration en volume comprise entre 0,5 et 60% par rapport au fluide, et
(c) d'un sel de potassium dans une concentration comprise entre 14,3 et 143 g/l.

2. Fluide de forage à base d'eau selon la revendication 1, dans lequel la concentration du poly(alkylèneglycol) est comprise entre 1 et 20% en volume par rapport au fluide.

3. Fluide de forage à base d'eau selon l'une des revendications précédentes dans lequel la concentration du sel de potassium est comprise entre 28,6 et 85,7 g/l.

4. Fluide de forage à base d'eau selon l'une des revendications précédentes dans lequel le poly(alkylèneglycol) est un poly(éthylèneglycol).

5. Fluide de forage à base d'eau selon l'une des revendications 1 à 4 dans lequel le poly(alkylèneglycol) contient des motifs oxyde d'éthylène et oxyde de propylène dans un rapport compris entre 1:3 et 3:1.

6. Fluide de forage à base d'eau selon l'une des revendications précédentes dans lequel le sel de potassium est le chlorure de potassium.

7. Fluide de forage à base d'eau selon l'une des revendications 1 à 5 dans lequel le sel de potassium est un formiate, un acétate, un carbonate ou un phosphate.

8. Fluide de forage à base d'eau selon l'une des revendications précédentes contenant en plus un ou plusieurs composants choisis dans le groupe formé par les agents alourdissants, les agents d'amélioration de la viscosité, les agents maîtrisant la perte de fluide, les inhibiteurs de schiste, et les agents de réglage de pH.

9. Fluide de forage à base. d'eau selon la revendication 8 contenant un inhibiteur de schiste qui est un polyacrylamide.

10. Fluide de forage à base d'eau selon la revendication 6 dans lequel le poly(alkylèneglycol) est un poly(éthylèneglycol) ou un poly(éthylène/polypropylèneglycol) et n est compris entre 4 et 12.

11. Fluide de forage à base d'eau selon la revendication 6 ou 10 dans lequel la concentration en volume de poly(alkylèneglycol) est comprise entre 2 et 10%.
